# EUROPEAN PATENT APPLICATION

(11) **EP 0 555 906 A1**
(43) Date of publication of application: **18.08.1993**
(21) Application number: 93200266.0
(22) Date of filing: 03.02.1993
(51) Int. Cl.: G11B 5/64, G11B 5/704, G11B 5/84

(54) **Glass substrate for magnetic recording medium**

(30) Priority: 11.02.1992 EP 92200380; 22.10.1992 EP 92203254
(71) Applicant: Philips Electronics N.V., 5621 BA Eindhoven (NL)
(72) Inventor: Van der Sluis-Van der Voort, Elisabeth, NL-5656 AA Eindhoven (NL); Van der Putten, Andreas Martinus Theodorus Paulus, NL-5656 AA Eindhoven (NL); Brambring, Jörg, NL-5656 AA Eindhoven (NL)
(74) Representative: van der Veer, Johannis Leendert

(57) **Abstract**

The present invention relates to a glass substrate having a well-defined surface roughness for use in a magnetic recording medium. The surface roughness is attained by a texture of particles having an average diameter of less than 10 nm. Preferably, the particles have a fibrous structure and an average length of less than 500 nm. Very satisfactory results are obtained by using boehmite as the material for the fibrous particles. Preferably, the boehmite solution comprises spherical noble-metal particles of, for example, Au or Pt.

## Description

The invention relates to a glass substrate which can suitably be used in a magnetic recording medium, at least a part of the surface of said substrate being provided with a texture. The invention also relates to a method of manufacturing such a glass substrate and to a magnetic recording medium comprising such a glass substrate.

The above-mentioned type of recording medium is used, *inter alia*, in a so-called "hard disc" of computers. Such a hard disc comprises a magnetic recording medium and a magnetic head for recording information on and reading and erasing it from said medium. When such a hard disc is in operation, the magnetic medium rotates at a defined speed with respect to the magnetic head. By virtue of said rotation, the magnetic head can rest on a thin air layer at a relatively short distance from the magnetic recording medium. In the currently used hard discs, said distance (the flying height) is approximately 400 nm. After deactivating the hard disc, the rotation of the magnetic medium stops and the magnetic head can "land" in a defined place of the medium. After activating the hard disc, the magnetic head "takes off" from this place. Thus, in the inoperative state both components are in contact with each other. This type of hard disc is commonly referred to as CSS-disc (contact-start-stop).

Substrates of a magnetic recording medium for use in a hard disc must meet high requirements which, to a certain extent, are contradictory. On the one hand, such substrates must be very smooth to enable a satisfactory signal transfer from the magnetic head to the medium and conversely. The signal/noise ratio which can be attained is inversely proportional to the distance between the magnetic head and the recording medium. On the other hand, the substrate must exhibit a well-defined surface roughness (texture). Said texture serves to preclude that the magnetic head, on landing or taking off, sticks to the medium. This "sticking" may cause damage to the magnetic head and/or the magnetic medium. Moreover, in the case of substrates exhibiting insufficient surface roughness, problems relating to friction may arise during the taking off and landing of the magnetic head.

A glass substrate of the type mentioned in the opening paragraph is known *per se*. For example, in United States Patent US 4,833,001, a description is given of a glass substrate having a texture, which glass substrate is intended for use in a magnetic recording medium. In this case, the texture is provided by chemically etching the surface of the glass substrate with a fluoride compound, followed, if necessary, by a polishing treatment. In this manner, a texture is obtained which is characterized by a maximum height Rₘₐₓ of less than 70 nm, measured over a reference length of 250 micrometer, and a maximum height in excess of 5 nm, measured over a reference length of 50 micrometer. The pitch of the "mountain" peaks of the texture obtained through chemical etching is 0.1-50 micrometer. Applicants have found that, in particular, this relatively large pitch has a negative effect on a high signal/noise ratio.

It is an object of the invention to provide a textured glass substrate for magnetic recording media, by means of which a signal/noise ratio can be obtained which is higher than that of conventional media. The invention more particularly aims at providing a textured glass substrate for recording media which can suitably be used in hard discs operating at a smaller flying height than the known hard discs. A further object of the invention is to provide a method of manufacturing, in a simple manner, such a glass substrate as well as a recording medium comprising such a glass substrate.

The above objects are achieved by a glass substrate of the type mentioned in the opening paragraph, which is characterized according to the invention in that the texture is brought about by a layer of particles having an average diameter of less than 10 nm, which is present on the substrate surface.

Various types of particles can suitably be adhered to a glass substrate. Spherical particles of a metal or metal alloy having an average diameter below 10 nm can in principle successively be used within the framework of the invention. Under certain conditions, however, the use of said particles has the disadvantage that they may adversely affect, for example by intermetallic diffusion, the magnetic properties of the magnetic recording layer to be provided at a later stage. However, this problem does not arise when noble-metal particles are used or when an intermediate layer of, for example, Cr is provided between the textured layer and the recording layer. Inert spherical particles of oxidic materials having the above-mentioned dimensions, such as aluminium oxide, titanium dioxide and/or silica particles, can more suitably be used under these conditions, because intermetallic diffusion does not occur when these particles are used. In addition, it has been found that such oxidic particles adhere better to glass than metallic particles. The particles are present substantially in a monolayer on the glass substrate.

The glass substrate according to the invention has a well-defined surface roughness which is regular throughout the surface. The surface roughness can be defined by means of two parameters, *i.e.* Ra and Rmax. Ra is defined as the arithmetic mean of all absolute distances from a straight base line through the roughness profile to the peak of said profile. Rmax is defined as the maximum peak-to-peak height of an arbitrary roughness profile of the surface, measured over a reference length of 10 micrometer. For example, the Ra value of the texture caused by the particles is of the order of approximately 10 nm. The maximum difference in height between the peaks (Rmax) in the texture is 30 nm, measured over a reference length of 10 micrometer. Besides, the pitch of the peaks is much smaller than in the known texture. The surface-roughness characteristic attained renders the substrate suitable, in principle, for use in a magnetic recording medium which can be used in a hard disc in which the magnetic head operates at a lower flying height. Applicants have found that such a characteristic of the surface roughness cannot be obtained by means of the above-described chemical etching methods. Said etching methods in glass are by definition isotropic. As a result, in particular the intended maximum difference in height betwwen the peaks cannot be realised. Using chemical etching processes, said difference in height cannot be increased to beyond approximately 20 nm, measured over a reference length of approximately 10 micrometer.

A preferred embodiment of the glass substrate according to the invention is characterized in that the layer comprises particles which have a fibrous structure and whose average length is less than 500 nm. It has been found that fibrous particles adhere much better to the glass substrate than spherical particles. Moreover, when the diameter of the fibrous particles is less than 10 nm, the intended texture on the surface of the glass substrate is attained. In particular boehmite, an aluminium-oxide compound having a fibrous structure, has proved very suitable in this respect. When the average fibre length is in excess of 500 nm the quality of the texture deteriorates, in particular as a result of uncontrollable cluster-formation of said boehmite particles. The length and the diameter of the boehmite particles can be adjusted because they are governed by the reaction conditions in which the boehmite is manufactured.

Very satisfactory results are obtained with a glass substrate having a textured layer which does not only comprise boehmite particles having an average diameter below 10 nm and an average length below 500 nm, but also spherical noble-metal particles. Metal particles which can suitably be used for this purpose are, in particular, Au and Pt. The average diameter of the metal particles ranges from 2 nm to 100 nm. By using both boehmite and metal particles, the Ra and Rmax values can be raised to approximately 10 nm and approximately 50 nm, respectively. Besides, the average pitch of the peaks can be adjusted by varying the ratio of boehmite to metallic particles in the solution.

The invention also relates to a method of manufacturing a glass substrate which can suitably be used in a magnetic recording medium. This method is characterized according to the invention in that it comprises the following steps:
a. polishing a surface of a glass substrate,
b. treating at least a part of the polished surface of the substrate with a colloidal suspension of particles having an average diameter of less than 10 nm, said particles preferably having a fibrous structure and an average length below 500 nm,
c. removing excess suspension from the surface of the substrate by rinsing,
d. drying the substrate.

The glass substrate can be polished mechanically in known manner. The substrate is then treated with a colloidal suspension of particles having an average diameter of less than 10 nm. If the entire surface of the substrate has to be provided with the desired texture, it is advantageous to immerse the substrate in such a suspension. Said method may alternatively be used to provide only a part of the substrate surface with a texture. In the latter case, it is to be preferred to cover the remaining part of the substrate and then spray a colloidal solution on the substrate or immerse said substrate in a colloidal solution. Preferably, said solution also contains spherical noble-metal particles of, in particular, Au or Pt.

After the colloidal solution has been in contact for some time with the part of the substrate to be textured, the non-adsorbed material can be removed by rinsing the substrate with, for example, water after which the substrate is dried with isopropanol. If desired, the substrate may then be subjected to a thermal treatment to improve the adhesion of the particles to the substrate. In this treatment, also any remaining solvents which cannot readily be evaporated are removed from the substrate.

Soda lime is preferably used as the substrate material. This material can be polished to a very flat and smooth finish in a relatively simple manner. If desired, this glass substrate can be reinforced after the polishing operation by treating it with a melt of a potassium salt, such as potassium nitrate.

The invention further relates to a magnetic recording medium which comprises a glass substrate according to the invention. Such a recording medium is characterized in that the textured surface of the glass substrate is provided with a magnetic recording layer which contains, preferably, CoPt and/or CoCr. In particular recording media in the form of multilayers are of great interest due to, in particular, the possibility of perpendicular recording. If desired, the recording medium may be provided with an intermediate layer of Cr which is located between the substrated and the recording layer.

The invention will be explained in greater detail by means of exemplary embodiments and with reference to the accompanying drawing, in which
Fig. 1 is a glass substrate according to the invention, for use in a magnetic recording medium,
Fig. 2 is a variant of the glass substrate according to the invention,
Fig. 3 is a sectional view of a magnetic recording medium comprising a glass substrate according to the invention.

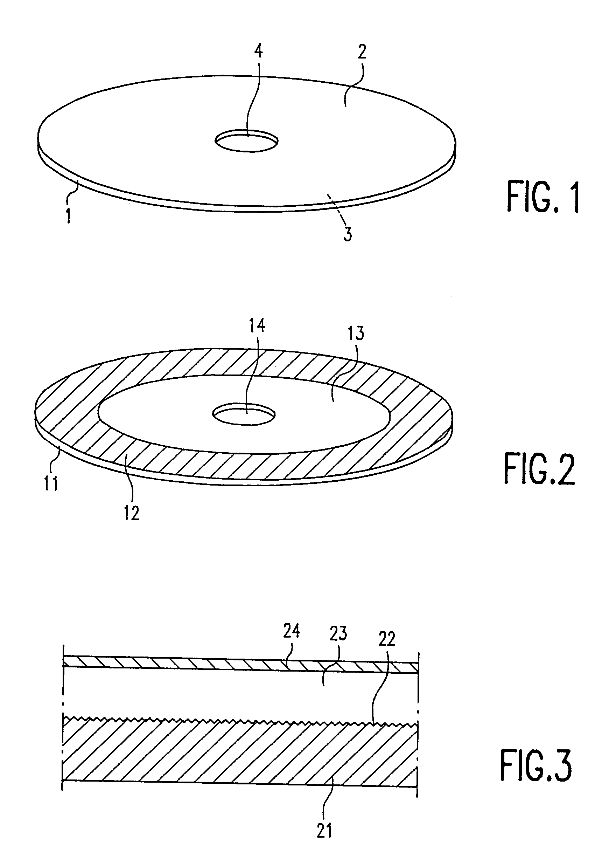

Fig. 1 shows a disc-shaped glass substrate 1 according to the invention having a section of 65 mm and a thicknes of 1 mm, which substrate is provided with a concentric bore 4. The substrate consists of soda lime which is polished mechanically on two sides. This resulted in very smooth surfaces 2 and 3. The surface roughness was examined by means of an Atomic Force Microscope (AFM). The Ra value was approximately 0.3 nm and the Rmax value was approximately 5 nm. The polished substrate was then chemically reinforced by subjecting it to a treatment with a molten potassium salt. In this treatment a part of the sodium ions present in the substrate are replaced by potassium ions.

The polished substrate was then immersed in a colloidal solution containing 5% by weight of boehmite (Baymal, trade name of Dupont, see US 2,915,475) for several minutes. The substrate was then removed from the solution and rinsed with demineralised water, dried with isopropanol and subjected to a thermal treatment at 250° C for several hours. Microscopic examination of the substrate thus treated showed that the glass was bilaterally textured throughout the surface. Under the conditions used, the surface of the glass substrate is slightly negatively charged and the particles to be absorbed are slightly positively charged, so that as a result of electrostatic attraction a satisfactory adhesion is obtained. By virtue thereof, the particles are bonded to the substrate only in a monolayer. AFM measurements showed that the Ra value of the surface roughness was approximately 5 nm, and the Rmax-value was approximately 22 nm.

In a number of further experiments a number of parameters was varied, such as the absorption time, the concentration of the particles and the size of the particles. In these experiments it was found that the absorption time must be minimally ten seconds and that the particle size is very important for the characteristic of the surface roughness.

In yet another experiment, a boehmite solution was prepared from alkaline aluminium acetate (Fluka, reagent grade) which was hydrolysed in demineralised water of 95° C to a final concentration of 32 g/l. After dialysis in demineralised water the colloidal solution obtained had a pH value of 5.0. A glass substrate was immersed in said solution for 4 minutes. After rinsing off the non-adhering particles with water, drying with isopropanol and a temperature treatment at 250° C, the substrate thus treated was examined by means of AFM. Under these conditions, the smaller size of the particles resulted in an Ra surface roughness value which was lower than that of the first experiment.

Under certain conditions it is desirable to obtain a surface roughness having an Ra value of approximately 10 nm and an Rmax value of approximately 50 nm. In experiments in which only boehmite was used it was found that these surface roughness values could not be attained and that the Ra value of pure boehmite ranges between 3 and 6 nm and the Rmax value ranges between 10 and 30 nm. Enlarging the boehmite particles by changing the reaction conditions proved unsuccessful. The intended Ra and Rmax values could be attained, however, if the boehmite solution also contained spherical noble-metal particles. Said particles were generated in the colloidal boehmite solution by in-situ reduction of noble-metal salts, such as Au and Pt salts. In combination with boehmite, the spherical Au or Pt particles formed in this process yield very stable colloidal solutions. Without boehmite the metal deposits as a dark grey precipitate.

In a number of experiments colloidal solutions were manufactured from boehmite (2-6 wt. %) in demineralised water by hydrolysing alkaline aluminium acetate, aluminum tert-butoxide or aluminium iso-propoxide at an increased temperature while stirring. After filtration of the colloidal solution thus formed, a desired quantity of H₂PtCl₆ was added to the solution. By means of dimethylamine borane (DMAB), said Pt compound was reduced in solution to spherical Pt particles having an average diameter in the range from 2 nm to 20 nm. The reduction of Au compounds under comparable conditions yielded spherical Au particles having an average diameter in the range from 5 to 100 nm.

The glass substrates were provided with a texture of the Pt/boehmite solution in the same manner as described above for the boehmite solution. By means of AFM measurements it was established that, dependent upon the reaction conditions, the surface roughness of the substrates thus treated is characterized by an Ra value in the range from 8 to 12 and an Rmax value in the range from 40 to 60.

Fig. 2 shows a variant of the above-described glass substrate according to the invention. In this variant, a chemically reinforced soda lime substrate 11 having a concentric bore 14 was polished on one side. Subsequently, the central part of the polished surface was covered with a mask after which the remaining part of the surface was sprayed with the colloidal boehmite solution, whether or not containing Pt, described in the preceding paragraph. The particles which were not adsorbed were rinsed off after some time, after which the substrate was dried with isopropanol and subjected to a thermal treatment. Finally, the mask was removed. By said measure, a textured glass substrate was obtained having an outer edge 12 which exhibited surface roughness, whereas the central part 13 of the substrate was substantially smooth.

Fig. 3 is a sectional view of a magnetic recording medium according to the invention, which recording medium comprises a glass substrate as described above. Glass substrate 21 is provided with a texture 22 which consists of a layer of fibrous particles which are provided as described above. A magnetic recording layer 23, in the form of a multilayer, is applied to said layer. If desired, an intermediate Cr layer may be provided between the recording layer and the substrate. If desired, the magnetic layer may be provided with a lubricant layer 24. By virtue of the desired surface roughness, this recording medium can be used in hard discs in which the flying height of the magnetic head above the medium is very small.

## Claims

1. A glass substrate which can suitably be used in a magnetic recording medium, at least a part of the surface of said substrate being provided with a texture, characterized in that the texture is brought about by a layer of particles having an average diameter of less than 10 nm which is present on the surface of the substrate.

2. A glass substrate as claimed in Claim 1, characterized in that the layer comprises particles which have a fibrous structure and whose average length is less than 500 nm.

3. A glass substrate as claimed in Claim 2, characterized in that boehmite is used for the fibrous particles.

4. A glass substrate as claimed in Claim 3, characterized in that the layer also comprises noble-metal particles, preferably, of Au or Pt.

5. A method of manufacturing a glass substrate which can suitably be used in a magnetic recording medium, characterized in that the method comprises the following steps:
a. polishing a surface of a glass substrate,
b. treating at least a part of the polished surface of the substrate with a colloidal suspension of particles having an average diameter of less than 10 nm, said particles preferably having a fibrous structure and an average length below 500 nm,
c. removing the excess suspension from the substrate surface by rinsing,
d. drying the substrate.

6. A method as claimed in Claim 5, characterized in that the colloidal suspension also contains spherical noble-metal particles of, preferably, Au or Pt.

7. A method as claimed in Claim 5 or 6, characterized in that after the substrate has been dried it is subjected to a thermal treatment.

8. A method as claimed in Claim 5, 6 or 7, characterized in that the substrate consists of silica glass which, before it is polished, is reinforced by subjecting it to a treatment in a solution of a molten potassium salt.

9. A magnetic recording medium comprising a glass substrate as claimed in Claim 1, 2, 3 or 4, characterized in that a magnetic recording layer which preferably contains CoPt and/or CoCr, is provided on the textured surface of the glass substrate.
